# EUROPÄISCHE PATENTSCHRIFT

(11) **EP 3 073 678 B1**
(45) Veröffentlichungstag und Bekanntmachung des Hinweises auf die Patenterteilung: **26.02.2020**
(21) Anmeldenummer: 16161343.5
(22) Anmeldetag: 21.03.2016
(51) Int. Cl.: H04L 12/28, H02J 3/14

(54) **VERFAHREN ZUR MITTEILUNG DER VERBRAUCHERLAST IN STROMNETZWERKEN**
METHOD FOR NOTIFICATION OF CONSUMER LOAD IN ELECTRICAL POWER NETWORKS
PROCEDE DE COMMUNICATION DE LA CHARGE DE CONSOMMATION DANS DES RESEAUX ELECTRIQUES

(30) Priorität: 27.03.2015 DE 102015104703
(43) Veröffentlichungstag der Anmeldung: 28.09.2016
(73) Patentinhaber: Deutsche Telekom AG, 53113 Bonn (DE)
(72) Erfinder: Huber, Michael, 67434 Neustadt a. d. W. (DE)
(74) Vertreter: Braun-Dullaeus Pannen Emmerling Patent- & Rechtsanwaltspartnerschaft mbB

(56) Entgegenhaltungen:
- US-A1- 2010 179 704
- US-A1- 2012 150 359
- US-A1- 2014 018 969

## Beschreibung

Die Erfindung betrifft ein Verfahren und ein System zur mittelnden Steuerung der Lastverteilung in einem von einem Energieversorger benutzten Stromnetz, über das eine Vielzahl von Haushalten mit Strom versorgt wird. Im Rahmen des Verfahrens ermittelt der Energieversorger die Netzauslastung und überträgt zum Ausgleich von Spitzenlasten und/oder von Überangeboten Steuerinformation an Haushaltsgeräte, die in hohem Maße Strom verbrauchen, in Abhängigkeit von der Netzauslastung.

Zum Einen stellen solche Spitzenlasten die Energieversorger und die Netzbetreiber vor große Herausforderungen. Um Spitzenlasten bewältigen zu können, werden schnelle Spitzenlastkraftwerke eingesetzt, wobei die Regulierung unvorhersehbarer Bedarfsspitzen mit solchen Spitzenlastkraftwerken technisch aufwendig und entsprechend teuer ist. Dementsprechend wird Strom zu Zeiten von Spitzenlasten an Strombörsen gehandelt, wo er entsprechend mehrere Euro pro Kilowattstunde kosten kann. Dennoch sind solche Spitzenlastkraftwerke notwendig, um bei auftretenden Lastspitzen das Netz zur Verhinderung von "Blackouts" schnell und flexibel zu stabilisieren.

Im umgekehrten Fall eines Überangebotes, beispielsweise hervorgerufen durch große Sonneneinstrahlung oder durch viel Wind, ist es für die Netzstabilität wichtig, das entsprechende Überangebot an Energie zeitnah abführen respektive die Kraftwerkskapazitäten zeitnah zurückführen zu können. Wenn die Energieerzeugung in der Kraftwerksinfrastruktur nicht schnell zurückgefahren werden kann, besteht ebenfalls die Gefahr von "Blackouts" im Stromnetz als Folge eines kurzfristigen Überangebots.

Insofern ist es für Energieversorger von großem Vorteil, Möglichkeiten zu haben, Spitzenlasten zu reduzieren und /oder Überangebote abbauen zu können. Dazu sind aus dem Stand der Technik entsprechende Vorgehensweisen bekannt. Insbesondere sei auf die DE 10 2012 224 128 A1 hingewiesen, die ein Verfahren offenbart, bei dem Energieversorger die Einschaltzeiten von Strom "fressenden" Haushaltsgeräten, die, wie beispielsweise Wasch- und Geschirrspülmaschinen einmal gestartete Programme abarbeiten, in gewissem Rahmen beeinflussen und damit einen Ausgleich bewirken können. In diesem Fall wird dem Haushaltsgerät seitens des Energieversorgers ein Einschaltzeitpunkt über das intelligente Stromnetz vorgeschlagen, zu dem ein geeigneter Netzzustand prognostiziert wird. Auf diese Weise ist es möglich, zu erwartende Spitzenlasten zu entlasten und Überangebote abzubauen. Nachteil dieser Vorgehensweise ist jedoch, dass die Einflussnahme des Energieversorgers nur begrenzt und vor allem nur insofern mittelbar ist, als sich die Vorschläge aus Prognosen ableiten und aktuelle Zustände nicht berücksichtigen.

Ein ähnliches Vorgehen ist aus der US 2013/0096726 A1 bekannt, wo ein Energieversorger ein elektrisches Gerät instruiert, in einem bestimmten vom Energieversorger als vorteilhaft prognostizierten Zeitintervall, das innerhalb eines vom Gerät vorgegebenen größeren Zeitrahmens liegt, einzuschalten. Mit der Instruktion gibt der Energieversorger einen Einschaltzeitpunkt respektive ein Intervall vor, in dem sich das Gerät vorteilhafterweise einschaltet. Das Einschalten selber obliegt dem Gerät. Dieselbe Vorgehensweise ist aus der US 2012/0150359 A1 bekannt.

Aufgabe der Erfindung ist es nunmehr, ein Verfahren respektive ein System zur mittelnden Steuerung der Lastverteilung vorzuschlagen, das sich einfach und mit kostengünstigen Mitteln umsetzen lässt und mit dem eine flexible und schnelle Reaktion auf einen aktuell und unvorhersehbar schwankenden Lastzustand in einem Stromnetz gewährleistet werden kann.

Diese Aufgabe wird durch das Verfahren nach Anspruch 1 und das System nach Anspruch 7 gelöst. Bevorzugte Ausgestaltungen ergeben sich aus den jeweiligen Unteransprüchen.

Entsprechend der Ansprüche liegt die grundlegende Idee der erfindungsgemäßen Lösung zusammengefasst darin, dem Energieversorger in gewissen Grenzen die tatsächliche und unmittelbare Kontrolle über den Betrieb von Verbrauchern, insbesondere von Haushaltsgeräten, zu geben, die er über sein Stromnetz mit Energie versorgt. Bei der vorliegenden Erfindung schaltet der Energieversorger selber das elektrische Gerät ein und aus und hat damit die Hoheit über das Gerät.

Dabei wird als "Energieversorger" jegliche Institution angesehen, die auf dem Weg vom Energieerzeuger zum elektischen Gerät in die Stromversorgung eingreifen kann.

Um mit einem solch massiven Eingriff beim Nutzer des Haushaltsgerätes auf Akzeptanz zu stoßen, muss die dem Energieversorger gewährte Kontrollfunktion sich aber in vom Nutzer definierten Grenzen halten. Diese Grenzen werden erfindungsgemäß durch ein Zeitfenster definiert, in denen der Nutzer respektive der Haushalt dem Energieversorger diese totale Kontrolle gestattet. Der Nutzer kann mit diesem Zeitfenster vorgeben, wann er den Betrieb des Haushaltsgerätes wünscht, respektive, welchen Zeitrahmen er für die Erledigung der Aufgabe akzeptiert. Zumindest bestimmt der Nutzer, wann das Haushaltsgerät spätestens den Betrieb aufnehmen soll und/oder wann es mit seiner "Arbeit" fertig sein soll.

In diesem Zeitfenster hat der Energieversorger erfindungsgemäß die Möglichkeit, die angeschlossenen externen Verbraucher unter Berücksichtigung der von ihm ermittelten aktuellen Netzauslastung respektive der aktuell im Netz vorhandenen Kapazitäten "fernzusteuern". Bei den Verbrauchen kann es sich um Haushaltsgeräte aber auch um andere Anlagen, beispielsweise auch geeignete Industrieanlagen handeln. Nachfolgend werden die Verbraucher jedoch zur besseren Veranschaulichung verallgemeinernd als "Haushaltsgeräte" bezeichnet. Im einfachsten Fall einer solchen Fernsteuerung übermittelt der Energieversorger einen Schaltbefehl, insbesondere einen Befehl zum Einschalten, an den Haushalt, mit dem das jeweilige Haushaltsgerät unmittelbar angesteuert wird. Der Energieversorger kann die Verbraucherlast im definierten Zeitfenster genau dann zuschalten, wenn das Haushaltsgerät aus Last- und Netzstabilitätsgründen optimal einsetzbar ist.

Das Besondere an der erfindungsgemäßen Vorgehensweise ist, dass zu versorgende (Haushalts)Geräte in privaten Haushalten seitens des Energieversorgers, der die gesamte aktuelle Netzsituation "vor Augen" hat, (fern)steuerbar werden. Somit ist es für ihn durch gezieltes Zu- und Abschalten der besonders energieintensiven Haushaltsgeräte möglich, gerade unvorhersehbar auftretende Lastspitzen im Netz zu vermeiden und Lasten auszugleichen. Auf unvorhersehbare Lastschawnkungen zu reagieren war bei den aus dem Stand der Technik bekannten Verfahren bislang noch nicht möglich. Mit dem zeitweiligen Abschalten oder der Verzögerung des Einschaltens können insbesondere die Ressourcen der besonders aufwendigen Spitzenlastkraftwerke eingespart werden und Energieüberangebote gezielt auf das Netz verteilt werden. Somit kann die Stromnetzstabilität seitens der Netzbetreiber über schnelle Energiequellen, also Verbraucher, die kurzfristig abgeschaltet werden können, und Energiesenken sicher gestellt werden.

Mit solchermaßen steuerbaren Haushaltsgeräten lassen sich Geschäftsmodelle zum gemeinsamen Vorteil von Verbrauchern, Netzbetreibern und Energieversorgern entwickeln. In einer vorteilhaften Ausführungsform kommuniziert der Energieversorger mit dem Haushaltsgerät vermittels einer dazwischen geschalteten Vermittlungs- und/oder Betriebsplattform und den in den Haushalten heute bereits etablierten "Smart-Home" Lösungen über das Internet. Über solche eine Vermittlungs- und/oder Betriebsplattform kann die steuerbare Verbraucherlast an die Stromnetzbetreiber verkauft oder vermittelt und die damit ersparten Erträge an den Verbraucher und den Betreiber der Plattform vergütet werden. Ein solches Modell trägt zum Umweltschutz bei und beruhigt das "grüne Gewissen" der Bevölkerung. Auf diese Weise kann jeder Nutzer etwas für die Umwelt tun und verdient sogar dabei.

Dabei ist es von besonderem Vorteil, dass das Verfahren nicht von dynamischen Stromtarifen der Stromanbieter abhängt; solche mithin nicht erforderlich sind. Vom Stromversorger wird für die Bereitstellung der Verbraucherlast eine entsprechende Vergütung gezahlt. Dabei ist der Stromtarif für den Endkunden fest und der Vermittlungsplattformbetreiber bekommt dafür eine Bonifikation, die er zu Teilen an den Kunden weiter gibt.

In einer vorteilhaften Ausführungsform kann die Vermittlungs- und/oder Betriebsplattform auf eine Vielzahl dezentraler Basisstationen zugreifen, die jeweils den Haushalten zugeordnet und vermittels Router über das Internet erreichbar sind. Die in einem Haushalt befindlichen Haushaltsgeräte kommunizieren mit der Basisstation via eines hausinternen Datenleitungsnetzes ("Intranet"), das insbesondere einen einheitlichen für die Haushaltsgeräte verständlichen Übertragungsstandard bereit stellt. Auf der anderen Seite steht die Vermittlungs- und/oder Betriebsplattform, insbesondere über das Internet, mit einer dem Energieversorger zugeordneten Steuereinheit in datenleitender Verbindung.

Ein entsprechendes Geschäftsmodell kann so aussehen, dass der Anbieter der Vermittlungs- und/oder Betriebsplattform die aktuell im Angebot stehende Verbraucherlast an Stromnetzbetreiber vermittelt. Der Stromnetzbetreiber steuert dann den Start der Verbraucherlast nach den eigenen Bedürfnissen in dem vom Endnutzer vorgegebenen Zeitfenster. Der Stromnetzbetreiber entrichtet dem Anbieter gegenüber eine Vermittlungsgebühr für die angebotene Verbraucherlast. Der Anbieter gibt einen Teil der erhaltenen Vermittlungsgebühr in monatlicher Abrechnung an den Endnutzer, seinen Kunden, weiter. Der Kunde bekommt damit einen Bonus für sein "Lastangebot" in dem Zeitfenster.

Die Vermittlungs- und/oder Betriebsplattform kann auch Lastanmeldungen sammeln, bündeln und an die verschiedenen Bedarfsgruppen, wie Stromversorger, Übertragungsnetzbetreiber, Kraftwerksbetreiber, Strombörse, vermitteln oder verkaufen. Dabei rechnet der Stromversorger gegenüber dem Kunden die Stromlieferungen ab. Nicht nur der Stromversorger hat ein Interesse an der Steuerung der Last, sondern je nach Bedarf alle Beteiligten im Verbundnetz, das ein komplexes Gebilde von verschiedenen beteiligten Firmen ist. Zu dem Verbund können Stromversorger, Kraftwerksbetreiber Übertragungsnetzbetreiber, die Strombörse und andere gehören.

Die Vermittlungs- und/oder Betriebsplattform bietet den Bedarfsgruppen entsprechende "Bündel" von Verbraucherlast an. Kauft ein Bedarfsträger ein Bündel, bekommt er von der Plattform die temporäre Hoheit zur Steuerung dieser Verbraucher im vereinbarten Rahmen. Bedarfsträger kann für einen regionalen Bereich das entsprechende Stadtwerk und für einen überregionalen Bereich ein Großkraftwerk sein, das aus betrieblichen Gründen Regelreserve braucht und die Stadtwerke mittelbar versorgt. Die Plattform verkauft die steuerbare Last an den, der sie gerade braucht. Dadurch kommt Flexibilität in das Verfahren zur Steuerung von Verbraucherlast. Die Plattform kann nicht nur die Vermittlungs- sondern auch "Betriebsaufgaben" übernehmen.

In einer besonders einfachen und daher zu bevorzugenden Ausführungsform schaltet der Energieversorger das Haushaltsgerät in dem ihm vorgegebenen Zeitfenster mit einem Einschaltbefehl ein, soweit es seine aktuelle Netzsituation zulässt. Mit dem Einschalten startet das Haushaltsgerät ein ihm vorgegebenes und entsprechend abzuarbeitendes Betriebsprogramm, das ohne Unterbrechung bis zum Ende läuft. Da der Energieversorger nach dem Starten keine Möglichkeit des Eingriffes mehr hat, ist es vorteilhaft, wenn ihm vor Übermittlung des Startbefehls weitergehende Informationen, beispielsweise die Art des Haushaltsgerätes, das abzuarbeitende Programm, der dafür benötigte Energieverbrauch und die Zeit bis zum Ende des Programms, vorliegen. Mit diesen Betriebsinformationen kann der Energieversorger ein entsprechendes Kontingent verplanen.

In einer anderen Ausführungsform werden dem Energieversorger weitergehende Kompetenzen bezüglich der Steuerung zugestanden. So kann es beispielsweise vorgesehen sein, dass er die Abarbeitung des Betriebsprogramms mit einem Schaltbefehl unterbrechen und später wieder aufnehmen kann. Solche weitergehenden Kompetenzen sind besonders vorteilhaft, da der Energieversorger noch flexibler auf unvorhersehbare Lastspitzen reagieren kann. Auch in diesem Falle ist es von Vorteil, wenn dem Energieversorger Betriebsinformationen der oben genannten Art zur Verfügung stehen. Damit kann er bei Unterbrechungen abschätzen, in welcher Phase sich das Betriebsprogramm gerade befindet, insbesondere ob eine Unterbrechung für das Ergebnis im Moment zuträglich ist, und wie viel Zeit und Energie noch bis zum Ende des Betriebsprogramms aufgewendet werden muss.

Schließlich ist der Energieverbrauch und die Betriebsdauer von Haushaltsgeräten ganz unterschiedlich: So brauchen heutige Geschirrspülmaschinen durchschnittlich etwa 1,2 KWh pro Spülgang und Wäschetrockner sogar 2,8 KWh pro Trockengang, während Waschmaschinen nur etwa 0,9 KWh pro Waschgang (bei 60°C) benötigen.

In einer anderen vorteilhaften Ausführungsform wird dem Energieversorger seitens des Haushalts respektive des Nutzers auch noch eine Priorisierung für ein individuelles Haushaltsgerät vorgegeben. In dieser Priorisierung kann sich ausdrücken, dass bestimmte Haushaltsgeräte und deren Programmabläufe eine Unterbrechung besser verkraften als andere. Der Energieversorger kann dann die Priorisierung berücksichtigen und seine Schaltbefehle entsprechend der Priorisierungen an die Haushaltsgeräte übermitteln. Mit dem Verfahren kann dem Haushalt respektive dem Nutzer eine Rückvergütung der Stromkosten gewährt werden, deren Höhe sich aus den Randzeiten und den Weiten der vorgegebenen Zeitfenster und/oder der Priorisierung ergibt.

Vorteilhafterweise ist die erfindungsgemäße Verfahrensweise im Rahmen einer Standardisierung mit Haushaltsgeräteherstellern abgestimmt, so dass deren Haushaltsgeräte problemlos über das erfindungsgemäße Verfahren steuerbar sind. Die Hersteller sehen bei ihren Geräten auch entsprechende Bedienmöglichkeiten und Netzschnittstellen vor. Beispielsweise kann der Nutzer das Zeitfenster über ein an dem Haushaltsgerät befindliches Bedienfeld seines Gerätes festlegen. Das Verfahren macht es sich zunutze, dass es dem Nutzer in vielen Fällen egal ist, ob beispielsweise die Spülmaschine zur Stromverbraucherhauptlastzeit um 19:00 Uhr oder nachts um 3:00 Uhr läuft.

Ein besonderer Vorteil, der erfindungsgemäßen Vorgehensweise ist, dass die Kommunikation zwischen dem Energieversorger und dem Haushaltsgerät nicht über das Stromnetz, sondern über ein separates Datenleitungsnetz, insbesondere das Internet, geschieht.

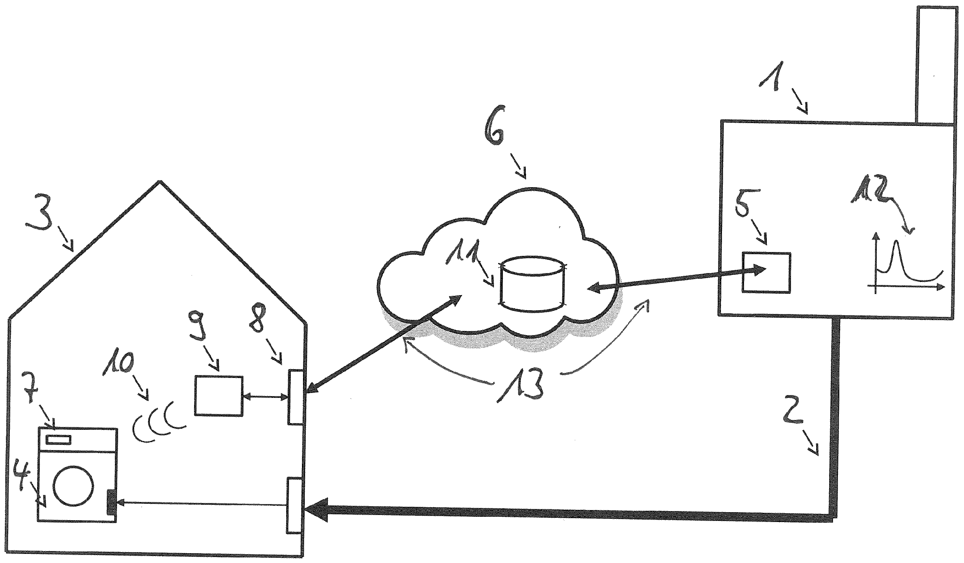

Die Erfindung wird nachfolgend anhand der Figur näher beschrieben.

Die Figur zeigt einen Energieversorger 1, der über ein Stromnetz 2 Haushalte 3 versorgt. In dem hier gezeigten Haushalt befindet sich eine Waschmaschine 4, die ihren Strom über das Stromnetz 2 erhält. Die erfindungsgemäße Lösung sieht nun vor, dass der Energieversorger 1 über eine Steueranlage 5 Zugang zum Internet 6 hat und über eine Vermittlungs- und/oder Betriebsplattform 11 diese bidirektionale Datenleitung 13 eine Fernsteuerung der Waschmaschine 4 unter Berücksichtigung der Netzauslastung vornehmen kann. Über die Vermittlungs- und/oder Betriebsplattform 11 im Internet wird ein Router 8 angesprochen, der dem Haushalt 3 zugeordnet ist der Zugang zu einer Basisstation 9 hat. Die Basisstation 9 kommuniziert über ein in diesem Fall drahtloses Intranet 10, beispielsweise WLAN, vermittels eines definierten Protokolls mit den Haushaltsgeräten, in diesem Fall mit der Waschmaschine 4.

Zu Beginn des erfindungsgemäßen Verfahrens wird dem Energieversorger 1 über ein an der Waschmaschine 4 vorgesehenes Bedienfeld 7 ein Zeitfenster für einen Einschaltzeitpunkt vorgegeben. Der Energieversorger 1 ist ständig über die aktuelle Netzauslastung 12 informiert und überträgt in dem Zeitfenster, soweit es die Netzauslastung gerade hergibt, einen Einschaltbefehl zur unmittelbaren Ansteuerung der Waschmaschine.

## Patentansprüche

1. Verfahren zur Steuerung der Lastverteilung in einem von einem Energieversorger benutzten Stromnetz, über das eine Vielzahl von Haushalten versorgt wird, wobei der Energieversorger die aktuelle Auslastung des Netzes ermittelt und in Abhängigkeit von der aktuellen Netzauslastung über ein Datenleitungsnetz Einschaltinformationen an Strom verbrauchende Haushaltsgeräte in den Haushalten überträgt, wobei dem Energieversorger von einem Nutzer eines Haushaltsgerätes ein Zeitfenster für einen Einschaltzeitpunkt des Haushaltsgerätes vorgegeben wird,
wobei der Energieversorger in Abhängigkeit der aktuell ermittelten Netzauslastung in dem Zeitfenster einen Einschaltbefehl überträgt, mit dem das Haushaltsgerät unmittelbar eingeschaltet wird, wobei der Einschaltbefehl über eine das Internet (6) nutzende bidirektionale Datenleitung (13) zwischen dem Energieversorger (1) und dem Verbraucher (4) übertragen wird,
**dadurch gekennzeichnet,**
**dass** der Energieversorger mit dem Haushaltsgerät mittels einer zwischengeschalteten Vermittlungs- und/oder Betriebsplattform über das Internet kommuniziert,
**dass** die Vermittlungs- und/oder Betriebsplattform Lastanmeldungen sammelt, bündelt und an verschiedene Bedarfsgruppen vermittelt, wobei ein Bedarfsträger durch einen Kauf eines Bündels von der Plattform temporäre Hoheit zur Steuerung dieser Verbraucher im vereinbarten Rahmen bekommt.

2. Verfahren nach Anspruch 1,
**dadurch gekennzeichnet,**
**dass** die Vermittlungs- / Betriebsplattform Basisstationen umfasst, die jeweils den Haushalten zugeordnet sind, wobei die in einem Haushalt befindlichen Haushaltsgeräte über ein hausinternes Datenleitungsnetz, insbesondere WLAN, mit der jeweiligen Basisstation kommunizieren, und wobei die Vermittlungs- und/oder Betriebsplattform mit einer Steuereinheit des Energieversorgers über das Internet in Verbindung steht.

3. Verfahren nach einem der vorherigen Ansprüche,
**dadurch gekennzeichnet,**
**dass** der Energieversorger mit dem Einschalten des Haushaltsgerätes ein vom Haushaltsgerät selbst abzuarbeitendes Betriebsprogramm startet.

4. Verfahren nach Anspruch 3,
**dadurch gekennzeichnet,**
**dass** der Energieversorger die Abarbeitung des Betriebsprogramms mit einem Schaltbefehl temporär unterbricht und wieder aufnimmt.

5. Verfahren nach einem der vorherigen Ansprüche,
**dadurch gekennzeichnet,**
**dass** dem Energieversorger seitens des Haushalts eine Priorisierung für das Haushaltsgerät vorgegeben wird, wobei der Energieversorger die Schaltbefehle entsprechend der Priorisierungen an die Haushalte übermittelt.

6. Verfahren nach einem der vorherigen Ansprüche,
**dadurch gekennzeichnet,**
**dass** dem Haushalt eine Rückvergütung der Stromkosten gewährt wird, deren Höhe sich aus den Randzeiten und den Weiten der vorgegebenen Zeitfenster und/oder der vorgegebenen Priorisierung ergibt.

7. System zur Durchführung des Verfahrens nach einem der vorherigen Ansprüche aufweisend
einen Energieversorger (1), der Verbraucher (4) über ein Stromnetz (2) mit Strom versorgt, wobei dem Energieversorger (1) Mittel zur Ermittlung der aktuellen Netzauslastung und zur Erzeugung von Schaltbefehlen in Abhängigkeit der Netzauslastung zur Verfügung stehen,
eine über das Internet (6) bestehende bidirektionale Datenleitung (13) zwischen dem Energieversorger (1) und dem Verbraucher (4) zur Vorgabe eines Zeitfensters an den Energieversorger (1) und zur unmittelbaren Übermittlung von Einschaltbefehlen an den Verbraucher (4),
**gekennzeichnet durch**
eine in die bidirektionale Datenleitung (13) zwischengeschaltete Vermittlungs- und/oder Betriebsplattform, wobei die Vermittlungs- und/oder Betriebsplattform Lastanmeldungen sammelt, bündelt und an verschiedene Bedarfsgruppen vermittelt, wobei ein Bedarfsträger **durch** einen Kauf eines Bündels von der Plattform temporäre Hoheit zur Steuerung dieser Verbraucher im vereinbarten Rahmen bekommt.

8. System nach Anspruch 7,
**gekennzeichnet durch**
ein im Haushalt (3) eingereichtet Intranet (10), an das mehrere Verbraucher (4) angeschlossen sind und das über eine Schnittstelle (8) zum Internet verfügt.

## Claims

1. A method for the control of the load distribution in a power network used by an energy supplier, by way of which a multiplicity of households are supplied, wherein the energy supplier determines the current capacity of the network and, as a function of the current network capacity, transmits switch-on information by way of a data line network to power-consuming domestic appliances in the households, wherein a time window for a switch-on time of a domestic appliance is specified to the energy supplier by a user of the domestic appliance, wherein
as a function of the currently determined network capacity, the energy supplier transmits a switch-on command in the time window, with which the domestic appliance is directly switched on, wherein the switch-on command is transmitted between the energy supplier (1) and the consumer (4) by way of a bi-directional data line (13), utilising the Internet (6),
**characterised**
**in that** the energy supplier communicates with the domestic appliance by way of the Internet, using an interposed communications and/or operations platform,
**in that** the communications and/or operations platform collects and bundles load registrations, and communicates them to various requirement groups, wherein by purchasing a bundle from the platform a user obtains temporary sovereignty for the control of these loads within the agreed framework.

2. The method according to claim 1,
**characterised**
**in that** the communications/operations platform comprises base stations, which are respectively assigned to the households, wherein the domestic appliances located in a household communicate with the respective base station by way of an in-house data line network, in particular WLAN, and wherein the communications and/or operations platform is connected by way of the Internet to a control unit of the energy supplier.

3. The method according to one of the preceding claims,
**characterised**
**in that** when the domestic appliance is switched on, the energy supplier initiates an operating program to be executed by the domestic appliance itself.

4. The method according to claim 3,
**characterised**
**in that** the energy supplier temporarily interrupts and resumes the execution of the operating program with a switching command.

5. The method according to one of the preceding claims,
**characterised**
**in that** a prioritisation for the domestic appliance is specified by the household to the energy supplier, wherein the energy supplier transmits the switching commands to the households according to the prioritisations.

6. The method according to one of the preceding claims,
**characterised**
**in that** a reimbursement of electricity costs is granted to the household, the amount of which ensues from the off-peak times, and the widths of the specified time windows, and/or the specified prioritisation.

7. A system for the execution of the method according to one of the preceding claims, having
an energy supplier (1), which supplies power to consumers (4) by way of an electrical network (2), wherein means are available to the energy supplier (1) for determining the current network capacity, and for generating switching commands as a function of the network capacity,
a bi-directional data line (13), constituted by way of the Internet (6) between the energy supplier (1) and the consumer (4), for the specification of a time window to the energy supplier (1), and for the direct transmission of switch-on commands to the consumer (4),
**characterised by**
a communications and/or operations platform interposed in the bi-directional data line (13), wherein the communications and/or operations platform collects and bundles load registrations, and communicates them to various requirement groups, wherein by purchasing a bundle from the platform a user obtains temporary sovereignty for the control of these loads within the agreed framework.

8. The system according to claim 7,
**characterised by**
an intranet (10) fitted in the household (3), to which a plurality of loads (4) are connected, and which has access to the Internet by way of an interface (8).

## Revendications

1. Procédé, destiné à commander la répartition de charges dans un réseau électrique exploité par un fournisseur d'énergie qui alimente une pluralité de foyers, le fournisseur d'énergie déterminant le taux d'exploitation actuel du réseau et en fonction du taux actuel d'exploitation du réseau, transmettant par l'intermédiaire d'un réseau de lignes de données des informations de mise en route à des appareils électro-ménagers consommateurs d'électricité se trouvant dans les foyers, une fenêtre de temps pour un moment de mise en route de l'appareil électro-ménager étant prescrite à l'attention du fournisseur d'énergie par un utilisateur,
en fonction du taux d'exploitation actuel du réseau déterminé, le fournisseur d'énergie transmettant dans la fenêtre de temps un ordre de mise en route, par lequel l'appareil électro-ménager est immédiatement mis en route, l'ordre de mise en route étant transmis entre le fournisseur d'énergie (1) et le consommateur (4) par l'intermédiaire d'une ligne de données (13) bidirectionnelle utilisant Internet (6),
**caractérisé,**
**en ce que** le fournisseur d'énergie communique avec l'appareil électro-ménager au moyen d'une plateforme d'intermédiation et/ou d'exploitation via Internet,
**en ce que** la plateforme d'intermédiation et/ou d'exploitation collecte, regroupe en paquets et transfère à différents groupes demandeurs des annonces de charge, par l'achat d'un paquet, un demandeur se voyant attribuer par la plate-forme une souveraineté temporaire pour commander lesdits consommateur dans le cadre convenu.

2. Procédé selon la revendication 1,
**caractérisé**
**en ce que** la plateforme d'intermédiation et/ou d'exploitation comprend des postes de base, qui sont respectivement associés aux foyers, les appareils électro-ménagers se trouvant dans un foyer communiquant avec le poste de base concerné via un réseau de lignes de données interne à la maison, notamment WLAN, et la plateforme d'intermédiation et/ou d'exploitation étant connectée via Internet avec une unité de commande du fournisseur d'énergie.

3. Procédé selon l'une quelconque des revendications précédentes,
**caractérisé**
**en ce qu'**avec la mise en route de l'appareil électro-ménager, le fournisseur d'énergie lance un programme d'exploitation qui doit être exécuté par l'appareil électro-ménager proprement dit.

4. Procédé selon la revendication 3,
**caractérisé**
**en ce que** le fournisseur d'énergie interrompt temporairement et reprend l'exécution du programme d'exploitation à l'aide d'un ordre de commutation.

5. Procédé selon l'une quelconque des revendications précédentes,
**caractérisé**
**en ce que** le foyer prescrit à l'attention du fournisseur d'énergie une priorisation pour l'appareil électro-ménager, le fournisseur d'énergie transférant les ordres de commutation aux foyers en fonction des priorisations.

6. Procédé selon l'une quelconque des revendications précédentes,
**caractérisé**
**en ce qu'**il est accordé au foyer un remboursement des coûts d'électricité dont le montant résulte des heures creuses et des étendues des fenêtres de temps prescrites et/ou de la priorisation prescrite.

7. Système, destiné à réaliser le procédé selon l'une quelconque des revendications précédentes, comportant
un fournisseur d'énergie (1), qui par l'intermédiaire d'un réseau électrique (2) alimente en courant électrique des consommateurs (4), des moyens destinés à déterminer le taux d'exploitation actuel du réseau et à générer des ordres de commutation en fonction du taux d'exploitation du réseau étant à la disposition du fournisseur d'énergie (1),
une ligne de données (13) existant via Internet (6) entre le fournisseur d'énergie (1) et le consommateur (4), pour la prescription d'une fenêtre de temps à l'attention du fournisseur d'énergie (1) et pour le transfert immédiat de d'ordres de mise en route au consommateur (4),
**caractérisé par**
une plateforme d'intermédiation et/ou d'exploitation interconnectée dans la ligne de données (13) bidirectionnelle, la plateforme d'intermédiation et/ou d'exploitation collectant, regroupant en paquets et transférant à différents groupes demandeurs des annonces de charge, par l'achat d'un paquet, un demandeur se voyant attribuer par la plate-forme une souveraineté temporaire pour commander lesdits consommateur dans le cadre convenu.

8. Système selon la revendication 7,
**caractérisé par**
un Intranet (10) installé dans un foyer (3), sur lequel sont connectés plusieurs consommateurs (4) et qui par l'intermédiaire d'une interface (8) dispose d'Internet.
